# EUROPEAN PATENT APPLICATION

(11) **EP 4 826 521 A1**
(43) Date of publication of application: **21.10.2026**
(21) Application number: 25170706.3
(22) Date of filing: 15.04.2025
(51) Int. Cl.: G06F 7/544, G06N 3/067

(54) **DYNAMICAL OPTICAL COMPUTING WITH ADJUSTABLE PHOTONIC WEIGHTS**

(71) Applicant: Akhetonics GmbH, 10823 Berlin (DE)
(72) Inventor: Michael,KISSNER, 63303 Dreieich (DE); Leonardo,DEL BINO, 80997 München (DE); Mirko, GOLDMANN, 10437 Berlin (DE); Maxim, ASMAT, 10117 Berlin (DE)
(74) Representative: Schmidt, Sebastian

(57) **Abstract**

An optical computing device (10) comprises an optical network having a plurality of multiplier units (1.1) and an optical medium (2) having a plurality of memory cells (2.1). Each multiplier unit (1.1) is in optical communication with a memory cell (2.1). Each multiplier unit (1.1) is configured to receive a first input signal and propagate the first input signal further towards a first memory cell (2.1) of the optical medium (2) for multiplying the first input signal with a first weight factor stored in the first memory cell (2.1). Each multiplier unit (1.1) is further configured to receive the first input signal multiplied with the first weight factor back from the first memory cell (2.1) to generate from the multiplied first input signal a first output signal for further processing.

## Description

### Technical field

The invention relates to devices and methods for dynamical optical computing.

### Background

Modern computing devices and data centers are designed to process vast amount of information as quickly as possible. However, traditional computing architectures based on electronic devices are limited by electronic clock rates and consume large amounts of power mainly due to high ohmic losses.

A promising alternative approach may be based on optics, i.e., photonic systems that can operate at the speed of light. However, most photonic architectures are either based on bulky optical components, complex circuitry or still heavily rely on electronic components, e.g., for control, readout and memory. This severely limits scalability, efficiency and flexibility of state-of-the-art optical platforms.

Thus, an object of the invention is to overcome such limitations and provide optical computing devices and methods that improve upon the available systems and methods for optical processing.

### Summary

This object of the invention is achieved by the optical computing device and the optical computing method as described in the appended independent claims. Advantageous developments and embodiments are described in the dependent claims.

In a first aspect, the invention relates to an optical computing device comprising an optical network having a plurality of multiplier units. The optical computing device further comprises an optical medium having a plurality of memory cells. Each multiplier unit of the plurality of multiplier units is in optical communication with a memory cell of the plurality of memory cells. Each multiplier unit is configured to receive a first input signal and propagate the first input signal further towards a first memory cell of the optical medium for multiplying the first input signal with a first weight factor stored in the first memory cell. Each multiplier unit is further configured to receive the first input signal multiplied with the first weight factor back from the first memory cell to generate from the multiplied first input signal a first output signal for further processing.

The proposed optical computing device allows for optical processing in an optical network and optical storage in an optical medium. In particular, means are provided for maintaining optical communication/coupling between the optical network and the optical medium using optical signals. Thereby, the optical computing device enables fast, efficient and integrated optical processing while maintaining enough flexibility and adaptability for maintenance, tuning and further scalability. Moreover, the plurality of multiplier units, each of them standing in optical communication with a memory cell, allow for massive parallelization of optical computing tasks.

For the sake of clarity, here and in the following an optical coupling and/or the standing in optical communication between two components, e.g., a multiplier unit and a memory cell, means that an effective optical mode coupling/overlap has been established between those two components that allows for the exchange of information via the coupled/overlapping optical modes and signals propagating in those modes.

A signal in the spirit of this disclosure may refer to a pulsed or continuous-wave optical signal. Each multiplier unit may process a different first input signal and/or a different first output signal. In particular, each multiplier unit may process a plurality of first input signals and/or a plurality of first output signals propagating in bursts. As described also further below, a multiplier unit may process a first input signal and/or a first output signal when standing in optical communication with a first memory cell and process a second input signal different from the first input signal and/or a second output signal different from the first output signal when standing in optical communication with a second memory cell different from the first memory cell.

In addition, it is noted that the term "optical" in the sense of the present disclosure refers to electromagnetic radiation in general and is not necessarily to be understood as limiting with respect to a specific frequency or wavelength range of the electromagnetic radiation used. For example, input or output signals may refer to a wavelength range in the visible spectrum but may also refer to microwave radiation or electromagnetic radiation in the THz range. Accordingly, the invention is applicable and practicable in a wide range of the electromagnetic spectrum.

The plurality of memory cells may comprise first memory cells and second memory cells. The first memory cells may be different and/or spaced apart from the second memory cells. The plurality of memory cells of the optical medium as specified by the claims may be a subset of all memory cells of the optical medium.

The plurality of multiplier units of the optical network may be a subset of all multiplier units of the optical network. Preferably, the number of memory cells of the plurality of memory cells is larger than 2. Preferably, the number of multiplier units of the plurality of multiplier units is larger than 2.

The number of memory cells of the plurality of memory cells may be larger than the number of multiplier units of the plurality of multiplier units. In particular, each multiplier unit of the plurality of multiplier units may be in optical communication with a different first memory cell and/or a different second memory cell.

A first weight factor stored in a memory cell may be encoded in an optical property of the memory cell. In particular, a value of a first weight factor stored in a memory cell may be in correspondence with a value of at least one optical parameter of the memory cell. An optical parameter may be an absorption (e.g., absorbance), transmission (e.g., transmittance) or reflection (e.g., reflectance) parameter. Each memory cell of the plurality of memory cells may store a weight factor.

Optionally, multiplying a (first input) signal with a (first) weight factor may correspond to a modulation of the respective signal, e.g., an amplitude, phase or frequency modulation. For example, a weight factor may be a real weight factor corresponding to a modulation of the amplitude of the input signal. A weight factor may also be a complex weight factor, e.g., a phase factor, for modulating the phase of an input signal. Correspondingly, the first input signal multiplied with the first weight factor, i.e., the multiplied first input signal, may thus be a modulated first input signal.

The optical network may be substantially planar. Optionally, the optical network may comprise or consist of or be arranged in one or more parallel, overlapping or stacked layers. The one or more layers of the optical network may be spaced apart from the optical medium in a direction normal to the one or more layers of the optical medium and/or normal to the one or more layers of the optical network.

The optical network may also comprise a substrate. The optical network and/or the one or more layers of the optical network may be arranged over the same substrate. At least one of the layers of the optical network may also comprise or consist of the substrate. For example, the substrate of the optical network may comprise, or consist of, Silicon.

Preferably, the plurality of multiplier units are arranged in the one or more layers of the optical network. Specifically, the plurality of multiplier units may be overlapping the same substrate of the optical network or may be arranged over or in a same substrate of the optical network.

Each multiplier unit of the plurality of multiplier units may comprise a first coupler. Each first coupler may be configured to couple a first input signal out of the optical network or out of a layer of the optical network. Each first coupler may further be configured to propagate the first input signal towards the optical medium. Specifically, the first coupler may be configured to propagate the first input signal towards a first memory cell of the optical medium, i.e., the memory cell that (currently) stands in optical communication with the multiplier unit to which the first coupler belongs.

Each multiplier unit of the plurality of multiplier units may comprise a second coupler. Each second coupler may be configured to couple a first input signal coming from the optical medium (back) into the optical network or into a layer of the optical network. Specifically, the second coupler may be configured to receive the multiplied first input signal from a first memory cell of the optical medium, i.e., the memory cell that (currently) stands in optical communication with the multiplier unit to which the second coupler belongs.

The first input signal coming from the optical network may be a multiplied first input signal, i.e., a first input signal that has been propagated by a first coupler of the multiplier unit towards the optical medium and was modulated in a memory cell by multiplying the first input signal with a first weight factor.

Each first and/or second coupler may be a mirror. Advantageously, each first and/or second coupler is a grating coupler, preferably a focused grating coupler. This may allow for smaller memory cells and thus increased information density per optical medium.

Preferably, the first couplers and the second couplers of the plurality of multiplier units are in a same layer of the optical network. In this case the optical communication between the optical network and the optical medium may be configured in reflection mode/configuration.

Optionally, the first couplers may also be in a first layer of the optical network and the second couplers may be in a second layer of the optical network. The second layer of the optical network may also be spaced apart from the first layer of the optical network. Optionally, the optical medium may be arranged between the first layer and the second layer of the optical network. In this case the optical communication between the optical network and the optical medium may be configured in transmission mode/configuration.

Optionally, each multiplier unit may additionally comprise at least one lens. The at least one lens may be positioned between the first coupler and the optical medium and/or between the second coupler and the optical medium. The at least one lens can be used to fine-tune the signal propagation path between the optical network and the optical medium for a first input signal.

Preferably, each multiplier unit comprises a first lens between the first coupler and the optical medium and a second lens between the second coupler and the optical medium.

In particular, the optical network may comprise, or consist of, an integrated optical or photonic circuit. For example, the integrated optical or photonic circuit may be a nanophotonic circuit.

Specifically, the optical network may comprise or consist of a waveguide array. The waveguide array may be arranged in a layer of the optical network. Each of the plurality of multiplier units may be connected to a waveguide of the waveguide array.

Each first coupler may be connected to a first waveguide of the optical network. Specifically, each first coupler may be configured to couple a first input signal out of the first waveguide and propagate the first input signal from the first waveguide towards the optical medium.

Each second coupler may be connected to a second waveguide of the optical network. Specifically, each second coupler may be configured to couple a (multiplied) first input signal coming from the optical medium into the second waveguide.

Optionally, the optical network comprises or consists of a Mach-Zehnder interferometer (MZI) network. The MZI network may comprise a plurality of Mach-Zehnder interferometers (MZls). At least one arm of each MZI may comprise at least one multiplier unit.

Alternatively, the optical network may be a Crossbar array. The Crossbar array may comprise a plurality of unit cells. Each unit cell of the crossbar array may comprise at least one multiplier unit.

The optical network may also comprise or be configured as a plurality of multiply and accumulate (MAC) units. Each MAC unit may be configured to perform three operations, OPS. Specifically, each MAC unit may be configured to perform two multiplications and one addition.

Each MAC unit may comprise two multiplier units of the plurality of multiplier units, e.g., a first multiplier unit and a second multiplier unit. The first multiplier unit may be configured to perform a first multiplication of the MAC unit. The second multiplier unit may be configured to perform a second multiplication of the MAC unit.

Additionally, each MAC unit may comprise an adder unit. The adder unit may be configured to perform an addition of the MAC unit. Optionally, the adder unit may be configured to add a first output signal or multiplied first input signal, e.g., of the first or second multiplier unit, to another signal propagating in the optical network. Specifically, the adder unit of a MAC unit may be configured to add the first output signal or multiplied first input signal of the first multiplier unit of the MAC unit to the first output signal or multiplied first input signal of the second multiplier unit of the MAC unit.

Optionally, the adder unit comprises or consists of a waveguide coupling element. For example, the adder unit may be configured to couple a second waveguide of the first multiplier unit of a MAC unit with a second waveguide of the second multiplier unit of the MAC unit.

In an MZI network, two MZIs may comprise or form at least one MAC unit. In a crossbar array, at least two unit cells may comprise or form a MAC unit.

The optical medium may be substantially planar. The optical medium may be spaced apart from the optical network in a direction normal to one or more layers of the optical medium and/or the optical network.

Optionally, the optical medium may comprise or consist of or be arranged in one or more parallel, overlapping or stacked layers. Specifically, one or more layers of the optical medium may be spaced apart from the optical network in a direction normal to one or more layers of the optical medium and/or normal to one or more layers of the optical network.

The optical medium may comprise a substrate. The optical medium and/or the one or more layers of the optical medium may be arranged over the same substrate. At least one of the layers of the optical medium may comprise or consist of the substrate. For example, the substrate of the optical medium may comprise, or consist of, Polycarbonate.

Preferably, the plurality of memory cells is arranged in one or more layers of the optical medium. Optionally, the plurality of memory cells is overlapping with or are arranged over or in a same substrate of the optical medium.

The optical medium may comprise or consists of a patterned optical material layer. The optical medium or the patterned optical material layer may comprise at least one first-type region and at least one second-type region. Preferably, the optical medium or the patterned optical material layer has a plurality of first-type regions and second-type regions. The plurality of first-type regions and second-type regions may form the plurality of memory cells of the optical medium. The patterning of the optical material layer into the at least one first-type region and the at least one second-type region may determine the values of the first weight factors stored in the plurality of memory cells of the optical medium.

The at least one first-type region and the at least one second-type region may differ in an optical property. Optionally, the at least one first-type region and the at least one second-type region may differ in a value of at least one optical parameter. For example, the at least one optical parameter may be at least one of an absorbance, transmittance or reflectance (e.g., of a first input signal).

Preferably, each memory cell comprises at least a portion of a first-type region and/or at least a portion of a second-type region. The precise combination of first-type regions and/or second-type regions and their relative proportions within each memory cell may then determine the value of the first weight factor stored in each memory cell.

A memory cell may comprise a first combination of at least a portion of a first-type region and a second-type region. The first combination may correspond to a first value of the first weight factor. For example, the first combination may comprise a first-type region and a second-type region. A first input signal coming from the optical network may first pass through the first-type region, get reflected at a layer of the optical medium and then also pass through the second-type region before propagating further back to the optical network. In this case, the first input signal may have been multiplied by the first value. Alternatively, the first combination may comprise no second-type region and only two first-type regions.

Another memory cell may comprise a second combination of at least a portion of a first-type region and a second-type region. For example, the second combination may comprise no first-type regions and only two second-type regions. The second combination may correspond to a second value of the first weight factor. A first input signal coming from the optical network may then first pass through one of the second-type regions, get reflected at a layer of the optical medium and then also pass through the other second-type region before propagating further back to the optical network. In this case, the first input signal may have been multiplied by a second value.

The first combination may be different from the second combination. This may result in the first value being different from the second value. For example, the first value may be associated or mapped to bit value or logic 0 and the second value may be associated or mapped to bit value or logic 1.

Optionally, the first combination may comprise a larger proportion of a first-type region as compared to the second combination. Additionally, or alternatively the first combination may comprise a smaller proportion of a second-type region as compared to the second combination.

The first combination may only comprise or consist of a first-type region or at least a portion of a first-type region and no portion of a second-type region. The second combination may only comprise or consist of a second-type region or at least a portion of a second-type region and no portion of a first-type region.

The optical medium or the patterned optical material may comprise, preferably consists of, a phase change material (layer). Exemplarily, the phase change material may comprise or consist of germanium-antimony-tellurium (GST).

Optionally, at least one or each first-type region comprises, preferably consists of, phase change material being in a first phase. Optionally, at least one or each second type region comprises, preferably consists of, phase change material being in a second phase. Optionally, at least one or each first-type region comprises consists of a portion of the phase change material being in a first phase. Optionally, at least one or each second type region consists of a portion of the phase change material being in a second phase.

The second phase may differ from the first phase in a value of at least one optical parameter. In particular, a value of at least one optical parameter in/of the first phase may be different from a value of the at least one optical parameter in/of the second phase. For example, the at least one optical parameter may be at least one of an absorbance, transmittance or reflectance (e.g., of a first input signal).

Optionally, the absorbance (of electromagnetic radiation, e.g., a first input signal) of the first phase may be stronger than the absorbance of the second phase. The transmittance (of electromagnetic radiation, e.g., a first input signal) of the second phase may be higher than the transmittance of the first phase.

The first phase and the second phase may be at least one of a crystalline phase and a transparent phase of the phase change material. Preferably, the first phase may be a crystalline phase of the phase change material. The second phase may be an amorphous phase of the phase change material. Alternatively, the first phase is an amorphous phase and the second phase is a crystalline phase.

The optical medium or the patterned optical material layer may also comprise more than two different types of regions, e.g., at least one third-type region. In this case, the patterning of the optical material layer into the at least one first-type region and the at least one second-type region and the at least one third-type region may determine the values of the first weight factors stored in the plurality of memory cells.

Optionally, each third type region comprises, preferably consists of, at least a portion of the phase change material being in a third phase. The third phase may differ from the first phase and the second phase in a value of the at least one optical parameter. For example, the third phase may be an intermediary phase. Preferably, the third phase may be partially crystalline and partially amorphous.

Optionally, the optical computing device comprises a mounting unit for mounting the optical medium. The mounting unit may be configured to receive and/or hold the optical medium. The mounting unit may also be configured to bring the optical medium in optical communication with the optical network.

Optionally, the optical medium is removably or interchangeably mounted (removable from the optical computing system). This may allow to remove and/or exchange the optical medium and bring another optical medium in optical communication with the optical network. The mounting unit may be configured to release or remove the optical medium for exchanging the optical medium.

The optical medium may also be movably mounted for changing the relative position of the plurality of memory cells relative to the plurality of multiplier units. Specifically, the optical medium may be movably mounted for changing the memory cells of the plurality of memory cells that are optically coupled with the multiplier units (i.e., with which memory cells of the plurality of memory cells the plurality of multiplier units are optically coupled). By changing with which memory cells the multiplier units are coupled, the values of the first weight factors may also be changed.

Optionally, the optical medium may be rotatably mounted or movable. For example, the optical medium may comprise or consist of a disc or a torus. Specifically, the optical medium may comprise or consist of a digital versatile disc (DVD).

Alternatively, the optical medium may be translatorily mounted or movable. For example, the optical medium may comprise or consist of a (substantially) linear strip or tape. Specifically, the optical medium may comprise or consist of a roll-to-roll or conveyer belt configuration.

The optical computing device may comprise a drive unit. The drive unit may be a part of the mounting unit or may be a separate component of the optical computing device.

The drive unit may be configured to move the optical medium relative to the optical network. Preferably, the drive unit is configured to move the plurality of memory cells relative to the plurality of multiplier units. Specifically, the drive unit may be configured to change the memory cells optically coupled with the multiplier units by moving the optical medium relative to the optical network.

For example, the drive unit may be configured to rotate the optical medium around a normal vector of an optical network layer. A rotation may be particular convenient when the optical medium is in the shape of a disc.

Alternatively, the drive unit may be configured to translate the optical medium in a direction parallel to an in-plane vector of an optical network layer. A translation may be particular convenient when the optical medium is in the shape of a linear strip or tape.

Specifically, the drive unit may be configured to move the optical medium relative to the optical network for changing at least one memory cell of the optical medium that is optically coupled and/or in optical communication with at least one of the multiplier units of the plurality of multiplier units. In this way, the plurality of memory cells that are optically coupled or stand in optical communication with the plurality of multiplier units can be exchanged, e.g., from a plurality of first memory cells to a plurality of second memory cells being different from the first memory cells.

Preferably, the plurality of memory cells are arranged in a plurality of tracks spaced apart from each other. Each track may comprise or consist of phase change material. The tracks may be separated from each other by another material. Preferably, the another material that separates the tracks from each other is not a phase change material.

Each track may comprise at least one memory cell. Optionally, each track maybe in optical communication with another multiplier unit of the plurality of multiplier units. Specifically, each track maybe in optical communication with another multiplier unit of the plurality of multiplier units through at least one memory cell that is optically coupled to said another multiplier unit.

Preferably, each track comprises at least two memory cells. For example, each track may comprise a first memory cell of the plurality of first memory cells and a second memory cell of the plurality of second memory cells.

Each track may be a circular track. A choice of circular tracks may be particular convenient when the optical medium is rotatably mountable and/or movable.

Each track may also be a linear track. A choice of linear tracks may be convenient when the optical medium is translatorily mountable and/or movable.

Optionally, the plurality of tracks comprises one track that stores meta information. The meta information may comprise information on the optical signals propagating though the optical network, e.g., regarding the timing of the first input signals. The track that stores meta information may be an outer circular track, e.g., when the optical medium is a disc.

The drive unit may be configured to move the optical medium along the plurality of tracks.

The optical computing device may be configured to perform an optical matrix-vector multiplication. Optionally, each first input signal may correspond to or encode a component of a vector. Each first weight factor may correspond to or encode a matrix element of a matrix to be multiplied with the vector. In this way the optical medium stores the matrix and the optical network is configured to compute the matrix-vector computation.

Exchanging the optical medium may allow to perform a matrix-vector multiplication with another matrix stored in another optical medium. Exchanging the memory cells with which the multiplier units are optically coupled by moving the optical medium may also allow to perform a matrix-vector multiplication with another matrix stored in the new (exchanged) memory cells.

In a second aspect, the invention also relates to an optical computing method for performing matrix-vector multiplication by using an optical computing device comprising an optical network having a plurality of multiplier units and an optical medium having a plurality of memory cells.

The optical computing method comprises:
- optically coupling each multiplier unit of the plurality of multiplier units with a different first memory cell of the plurality of memory cells; and
- receiving, by at least one multiplier unit, a first input signal corresponding to a component of a first vector; and
- propagating, by the at least one multiplier unit, the first input signal further towards a first memory cell for multiplying the first input signal with a first weight factor stored in the first memory cell, wherein the first weight factor corresponds to a first matrix element; and
- multiplying the first input signal with the first weight factor by letting the first input signal interact with the first memory cell; and
- receiving, by the at least one multiplier unit, the first input signal multiplied with the first weight factor back from the first memory cell to generate a first output signal representing a first multiplication result for further processing.

The optical computing device used to perform the optical computing method may also be configured according to the first aspect or any variant thereof.

Preferably, the steps of the optical computing method are performed by each multiplier unit of the plurality of multiplier units. In particular, each multiplier unit of the plurality of multiplier units may be receiving a (different) first input signal, wherein each first input signal corresponds to a component of a first vector. In this case, each multiplier unit of the plurality of multiplier units may be propagating a (different) first input signal further towards a (different) first memory cell. Each first input signal may then be multiplied with a first weight factor by letting each first input signal interact with a different first memory cell. Each multiplied first input signal multiplied may be received back from a first memory cell by a first multiplier unit to generate a first output signal representing a first multiplication result for further processing. Thus, a plurality of first input signals may become multiplied with a plurality of first weight factors, each first weight factor representing a different matrix element of a first matrix. In this way, an entire matrix for the matrix-vector multiplication may be read out or may be determined by the plurality of multiplier units. Preferably, all matrix elements of the matrix are multiplied with the first input signal (or, equivalently, modulate the first input signal) simultaneously.

The optical computing method may comprise moving, by a drive unit of the optical computing device, the optical medium relative to the optical network. The relative moving or the drive unit may be characterized as described with respect to the first aspect.

Specifically, the method may comprise moving, by a drive unit of the optical computing device, the optical medium relative to the optical network and thereby optically coupling the at least one multiplier unit with a second memory cell of the plurality of memory cells different from the first memory cell of the plurality of memory cells for generating from a second input signal received by the at least one multiplier unit and from a second weight factor stored in the second memory cell a second output signal representing a second multiplication result.

Optionally, moving the optical medium relative to the optical network comprises rotating the optical medium around a normal vector of an optical network layer. Alternatively, or additionally, moving the optical medium relative to the optical network comprises translating the optical medium in a direction parallel to an in-plane vector of an optical network layer.

In particular, the plurality of memory cells may comprise a plurality of first memory cells and a plurality of second memory cells. The method may thus further comprise optically coupling the at least one multiplier unit with a second memory cell different from the first memory cell of the plurality of memory cells by moving the optical medium relative to the optical network. Preferably, the method comprises optically coupling each multiplier unit of the plurality of multiplier units with a (different) second memory cell of the plurality of second memory cells by moving the optical medium relative to the optical network. Each second memory cell of the plurality of memory cells may be different from any first memory cell of the plurality of first memory cells.

The optical computing method may further comprise adding, by an adder unit of the optical network, the first output signal as generated by the at least one multiplier unit to another signal propagating in the optical network to perform an optical multiply-accumulate operation as part of the matrix-vector multiplication. The first output signal may be generated from a first multiplier unit and the another signal may be another first output signal generated from a second multiplier unit as also described in the context of a MAC unit according to a variant of the first aspect.

In a third aspect, the invention also relates to a computer program comprising instructions which, when the program is executed by a computer using an optical computing device, cause the computer to carry out the optical computing method according to the second aspect or any combination of its features as described above. The computer program (or a sequence of instructions) may use software means for performing the optical computing method when the computer program runs in a computing unit/device. The computer program can be stored directly in an internal memory, a memory unit, or the computer.

In a fourth aspect, the invention also relates to a computer-readable data carrier having stored there on the computer program described with respect to the third aspect or any variant thereof. The computer program can be stored in machine-readable data carrier(s), preferably digital storage media.

In summary, the proposed invention enables energy efficient all-optical computing that allows to realize lossless matrix-vector multiplication applicable to a wide range of computation heavy applications and large-scale simulations, e.g., high-performance computing, in particular super-computing, large simulations, e.g., weather simulations or physics simulations, artificial intelligence training, artificial intelligence inference, machine learning, deep learning and related settings. In particular, the values of a matrix, e.g., the weights in artificial learning, in particular deep learning, can be changed and adapted in a flexible and efficient manner without requiring complex circuitry as often employed in state-of-the-art systems, e.g., based on electro-optical modulators.

Features of the different aspects can be combined with one another and can also be claimed individually.

### Brief summary of the Drawings

Exemplary embodiments of the invention are illustrated in the drawings and will now be described with reference to figures 1 to 11.

In the figures:
- Fig. 1: shows a top view of an example of an optical computing device,
- Fig. 2: shows a cross section view of an example of an optical computing device,
- Fig. 3: shows a top view of a Mach-Zehnder interferometer network as an example of an optical network,
- Fig. 4: shows a cross section view of an optical network in optical communication with an optical medium having two patterned optical material layer,
- Fig. 5: shows a cross section view of an optical network having multiplier units in two overlapping layers in optical communication with an optical medium,
- Fig. 6: shows a cross section view of an optical network in optical communication with an optical medium in a transmission configuration,
- Fig. 7: shows a plurality of Mach-Zehnder interferometer networks interconnected via delay lines and activation function units,
- Fig. 8: shows a top view of a Crossbar network as an example of an optical network,
- Fig. 9: shows a top view of a Crossbar network as an example of an optical network and a disc as an example of an optical medium,
- Fig. 10: shows a top view of a Crossbar network as an example of an optical network and a linear strip as an example of an optical medium,
- Fig. 11: shows a schematic process flow of an optical computing method.

### Detailed description of the Drawings

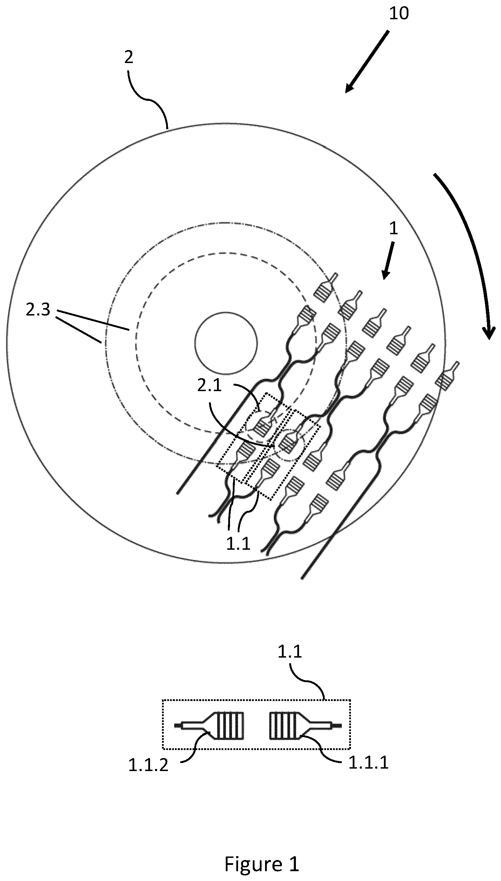

The upper panel of Figure 1 shows a top view of an example of an optical computing device 10. The optical computing device 10 comprises an optical network 1 having a plurality of multiplier units 1.1 and an optical medium 2 having a plurality of memory cells 2.1. Each multiplier unit 1.1 is in optical communication with a different first memory cell 2.1 of the plurality of memory cells 2.1 of the optical medium 2.

In this specific embodiment the optical network 1 is a waveguide array and comprises a Mach-Zehnder interferometer network. The optical medium 2 is a disc. The memory cells 2.1 are arranged in circular tracks 2.3 of the disc. The tracks 2.3 are spaced from each other and each track 2.3 comprises a plurality of memory cells 2.1. Each track 2.3 stands in optical communication with another multiplier unit 1.1 of the plurality of multiplier units 1.1 through one first memory cell 2.1 of the plurality of memory cells 2.1 of each track 2.3.

For example, Figure 1 represents a time snapshot wherein each one of the two first memory cells 2.1 that are depicted as encircled and that belong to two different tracks 2.3 is in optical communication with a different multiplier unit 1.1 that is (currently) overlapping with a respective track 2.3.

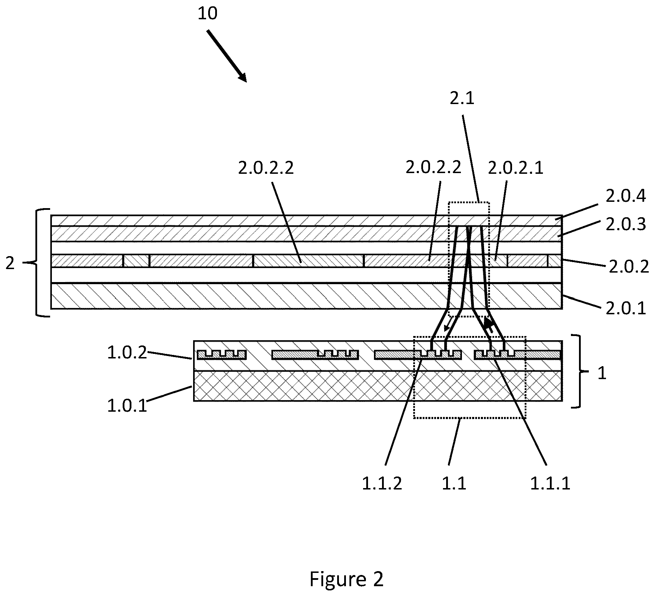

The lower panel of Figure 1 shows a magnified top view of a multiplier unit 1.1. In this specific embodiment each multiplier unit 1.1 comprises a first coupler 1.1.1 and a second coupler 1.1.2 spaced apart from the first coupler 1.1.1. In particular, each first coupler 1.1.1 and second coupler 1.1.2 is a grating coupler. The functionality of the multiplier unit 1.1 will be described in more detail further below in relation to Figure 2.

The optical medium 2 is removably mounted such that the optical medium 2 can be removed and replaced, i.e., such that another optical medium 2 can be mounted as part of the optical computing device 10 for further optical computing with the another optical medium 2.

In particular, the optical computing device 10 comprises a mounting unit (not shown in Figure 1). The mounting unit is configured to receive and mount the optical medium 2 thereby bringing the optical medium 2 in optical communication with the optical network 1. Additionally, the mounting unit is configured to release the optical medium 2 for exchanging the (current) optical medium 2 with another optical medium 2 (see arrow in Figure 1).

The optical medium 2 is also movably mounted for changing the memory cells 2.1 with which the multiplier units 1.1 are optically coupled. More specifically, the optical medium 2 is rotatably mounted.

The optical computing device 10 also comprises a drive unit (not shown in Figure 1). The drive unit is part of the mounting unit. The drive unit is configured to rotate the optical medium 2 around a normal vector of an optical network layer 1 (i.e., a normal vector pointing out of the plane of Figure 1).

By rotating the optical medium 2, the multiplier units 1.1 of the optical network can be brought into optical communication with a new set of second memory cells 2.1 of the plurality of memory cells 2.1 of the optical medium. In particular, by rotating the optical medium 2, the memory cells 2.1 that stand in optical communication with the multiplier units 1.1 of the optical network 1 change from the first memory cells 2.1 to the second memory cells 2.1. Note that each track 2.3 comprises at least a first memory cell 2.1 and a second memory cell 2.1.

Figure 2 shows a cross section view of an example of an optical computing device 10. The optical medium 2 comprises a plurality of layers 2.0.1, 2.0.2, 2.0.3, 2.0.4. The first layer 2.0.1 is a common substrate made of polycarbonate. The second, third and fourth layers 2.0.2, 2.0.3, 2.0.4 of the optical medium 2 are arranged over the common substrate 2.0.1.

The second layer 2.0.2 is a patterned optical material layer comprising a phase-change material. The phase change material comprises first-type regions 2.0.2.1 corresponding to portions of the phase change material in a first phase and second type regions 2.0.2.2 corresponding to portions of the phase change material in a second phase.

In this specific embodiment, the phase change material is germanium-antimony-tellurium, GST. The first phase is an amorphous phase and is substantially transparent to optical signals. The second phase is a crystalline phase and is highly absorbent for optical signals. In particular, the first phase is more transparent and less absorbent than the second phase. The phase change material is embedded in a dielectric material that separates the phase change material from the substrate 2.0.1 and third and fourth layers 2.0.3, 2.0.4.

In the example shown in Figure 2, the memory cell 2.1 that is (currently) in optical communication with the multiplier unit 1.1 comprises a portion of a first-type region 2.0.2.1 and a portion of a second-type region 2.0.2.2. In an alternative embodiment, a memory cell 2.1 may also comprise always only one type of region. Depending on how first-type and second-type regions are arranged and combined in the respective memory cells 2.1, different values of first weight factors may be realized in each of the memory cells 2.1 as explained further below.

The optical medium 2 further comprises a reflective metal layer 2.0.3 as a third layer and a protective hard coating 2.0.4 as a fourth layer. The reflective metal layer 2.0.3 and the protective hard coating 2.0.4 are configured to reflect a signal coming from the optical network 1 back to the optical network 1. Figure 2 thus shows a reflection geometry. In this embodiment, the reflective metal layer 2.0.3 comprises or consists of Silver.

The optical medium 2 is spaced apart from the optical network 1 in a direction normal to the first to fourth layers 2.0.1, 2.0.2, 2.0.3, 2.0.4 of the optical medium 2 and the optical network 1.

The optical network 1 shown in Figure 2 comprises a substrate 1.0.1 made from Silicon as a first layer 1.0.1 and a second layer 1.0.2 stacked over and on the substrate 1.0.1. The second layer 1.0.2 comprises the multiplier units 1.1 with the first and second couplers 1.1.1, 1.1.2. The second layer 1.0.2 also comprises waveguides connected to the first and second couplers 1.1.1, 1.1.2. In this embodiment, the multiplier units 1.1 and the waveguides are embedded in a silicon dioxide cladding as part of the second layer 1.0.2. The waveguides form a waveguide array and are made from silicon nitride.

The multiplier unit 1.1 is configured to receive, by the first coupler 1.1.1, a first input signal. The first input signal may be a signal that has originally been received by another (input) component of the optical network 1 and has thus already propagated in the optical network 1 until it is received by the first coupler 1.1.1 of the multiplier unit 1.1 shown in Figure 2.

The multiplier unit 1.1 is then further configured to propagate, by the first coupler 1.1.1, the first input signal further towards a first memory cell 2.1 of the optical medium 2 by coupling the first input signal out of the optical network 2, i.e., out of the second layer 1.0.2 and the waveguide connected to the first coupler 1.1.1, and directing the first input signal towards the first memory cell 2.1 of the optical medium 2.

In Figure 2, the first input signal is then received by the memory cell 2.1. Inside the memory cell 2.1 the first input signal gets modulated and the modulated first input signal is then reflected back towards the second coupler 1.1.2 of the multiplier unit 1.1. In particular, the first input signal becomes modulated by the memory cell 2.1 by interacting with the memory cell 2.1. This interaction results in a modulation that comprises a multiplication of the first input signal with a first weight factor. The process of modulation and interaction will be described in more detail further below.

The multiplier unit 1.1 is then further configured to receive, by the second coupler 1.1.2, the first input signal multiplied with the first weight factor, i.e., the modulated first input signal, back from the first memory cell 2.1 to generate from the multiplied first input signal a first output signal for further processing in the optical network 1. Here, the first output signal corresponds to the modulated first input signal received by the second coupler 1.1.2. The first output signal is then propagated by a waveguide connected to the second coupler 1.1.2 of the first multiplier unit 1.1 into further components/units of the optical network 1 for further processing.

By the interaction of the first input signal with the memory cell 2.1, the first input signal is modulated, i.e., multiplied with a first weight factor. The modulation and the value of the first weight factor depend on the optical property of the memory cell 2.1 and in particular of the type of portion(s) of the patterned optical material layer 2.0.2 that belong to the first memory cell 2.1.

In the example shown in Figure 2, the first input signal first transmits through a portion of a first-type region 2.0.2.1 that is nearly transparent (on an upward propagation path), then gets reflected at the reflective layers 2.0.3, 2.0.4 and subsequently transmits through a portion of a second-type region 2.0.2.2 that is highly absorbent (on a downward propagation path) such that the amplitude of the modulated first input signal that arrives back from the optical medium 2 at the second coupler 1.1.2 is highly damped corresponding to a small first value of a real-valued first weight factor close to 0. Such a small value of the first weight factor may be associated with a logic 0 (or a particular predetermined first value of a matrix element).

Thus, once the propagation path of the first input signal is determined by the configuration of the first and second optical coupler 1.1.1, 1.1.2 of the multiplier unit 1.1 as well as the positioning of the optical medium 2 with respect to the optical network 1, the first weight factor is determined by the value of an optical parameter of the memory cell 2.1 along the propagation path. Here, the optical parameter is the absorbance, i.e., the absorption of the first input signal along its propagation path. The value of the absorption along the propagation path is in turn determined by the optical properties of the type of portion(s) of the patterned optical material layer 2.0.2 belonging to the first memory cell 2.1.

In this example, a logic 1 would be stored in another memory cell 2.1 that ex-hibts less absorption. Said another memory cell 2.1 may comprise only two (nearly transparent) first-type regions 2.0.2.1 of the patterned optical material layer 2.0.2 rather than a first-type region and a second-type region 2.0.2.2. The portion of the phase change material 2.0.2 that belongs to said another multiplier unit 1.1 is then almost transparent along all path sections of the propagation path of the first input signal that transmits through the phase change material 2.0.2 in said another memory cell 2.1 (e.g., on the upward as well as downward path). Thus, the amplitude of the modulated another first input signal that arrives back from the optical medium 2 at a second coupler 1.1.2 of the another multiplier unit 1.1 is only weakly damped corresponding to a second value of a real-valued first weight factor close to 1. Such a value of the first weight factor may then be associated with a logic 1 (or a particular predetermined second value of a (another) matrix element).

In particular, the second value is larger than the first value due to the different combination and proportions of the first-type and second-type regions in the two different memory cells 2.1 described above.

In alternative embodiments, also different combinations of first-type and second-type regions in a memory cell may correspond to logic 0 or 1. For example, in an alternative embodiment, a memory cell that stores a first logic state (e.g., corresponding to a bit value 0), preferably each memory cell that stores a first logic state, comprises only (a) first-type region(s), i.e., a portion of the patterned phase change material being in the first phase (and no second-type region, i.e., no portion of the patterned phase change material being in the second phase). In said alternative embodiment, a memory cell that stores a second logic state (e.g., corresponding to a bit value 1), preferably each memory cell that stores a second logic state, comprises only (a) second-type region(s), i.e., a portion of the patterned phase change material being in the second phase (and no first-type region, i.e., no portion of the patterned phase change material being in the first phase).

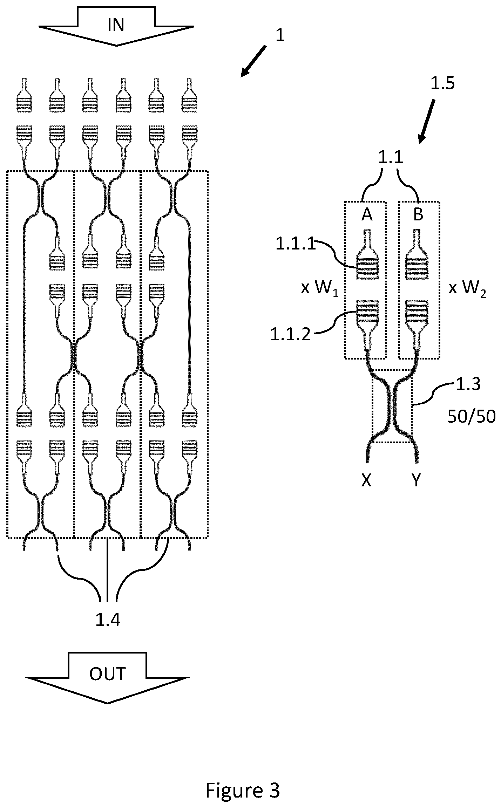

Figure 3 shows in the left panel a top view of a Mach-Zehnder interferometer network as an example of an optical network 1. The optical network 1 shown in Figure 3 comprises a plurality of Mach-Zehnder interferometers 1.4, MZI. Each MZI comprises at least one multiplier unit 1.1 in at least one arm of the respective MZI and at least two adder units 1.3. Specifically, the two arms of each MZI 1.4 are connected with and arranged between the two adder units 1.3.

Each adder unit 1.3 is a waveguide coupler. Specifically, each adder unit 1.3 is configured to add a first output signal of a multiplier unit 1.1 to another signal propagating in the optical network 1. For example, the another signal may be another first output signal of another multiplier unit 1.1. Here, each adder unit 1.3 is a waveguide coupler that connects to the two arms of the respective MZI.

The optical network 1 shown in Figure 3 also comprises a plurality of multiply and accumulate, MAC, units 1.5. The right panel of Figure 3 shows one example of such a MAC unit 1.5. Each MAC unit 1.5 comprise two multiplier units 1.1, a first multiplier unit 1.1 and a second multiplier unit 1.1. Additionally, each MAC unit 1.5 comprises an adder unit 1.3.

The adder unit 1.3 of the MAC unit 1.5 is configured to add the first output signal of the first multiplier unit 1.1 of the MAC unit 1.5 to the first output signal of the second multiplier unit 1.1 of the MAC unit 1.5.

The MAC unit 1.5 is thus configured to perform a matrix-vector multiplication with $X = 1 / \sqrt{2} \left({W}_{1}A+{W}_{2}B\right)$ (1) and $Y = 1 / \sqrt{2} \left({W}_{1}A-{W}_{2}B\right)$ (2) wherein *A* is the first input signal of the first multiplier unit 1.1 and *B* is the first input signal of the second multiplier unit 1.1, *W*₁ is the first weight factor of the first memory cell 2.1 that stands in optical communication with the first multiplier unit 1.1 and *W*₂ is the first weight factor of a different first memory cell 2.1 that stands in optical communication with the second multiplier unit 1.1.

The adder unit 1.3 is a 50/50 waveguide coupler such that the first output signal *W*₁*A* of the first multiplier unit 1.1 is added to the first output signal *W*₂*B* of the second multiplier unit 1.1 with equal amplitude fraction $1 / \sqrt{2}$ yielding the first output *X* of the MAC unit 1.5 and the second output *Y* of the MAC unit 1.5 as described in Eqs. (1) and (2).

Note that equations (1) and (2) describe an optical matrix-vector multiplication, wherein each first input signal corresponds to a component of an input vector *v* = (*A*, *B*)*^{T}* and each first weight factor corresponds to a matrix element of a matrix M to be multiplied with the input vector resulting in the output vector *z* = (*X, Y*)*^{T}* = *Mv*, wherein the matrix elements of the matrix *M* comprise the first weight factors.

In particular, in this way the optical computing device 10 is configured to perform an optical matrix-vector multiplication. By moving the optical medium 2 for changing the memory cells 2.1 that are optically coupled to the multiplier units 1.1 from the first memory cells to the second memory cells 2.1 a new matrix can be used for performing the matrix-vector computation, wherein the new matrix is defined by the second memory cells 2.1.

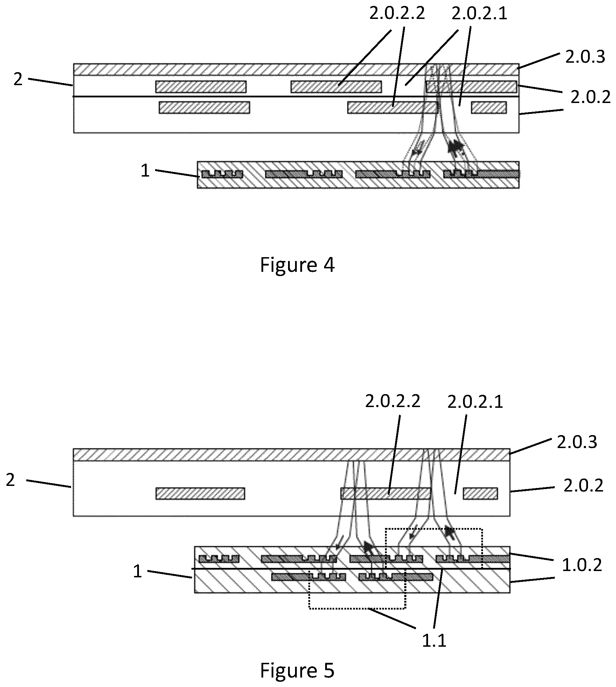

Figure 4 shows an embodiment of an optical medium 2, wherein the patterned optical material layer 2.0.2 comprises a multi-layer structure. In particular, the multi-layer structure of the optical medium 2 comprises a first layer and a second layer on the first layer. The first layer of the patterned optical material layer 2.0.2 comprises a specific combination of first-type regions 2.0.2.1 and second-type regions 2.0.2.2. The second layer of the patterned optical material layer 2.0.2 comprises another combination of first-type regions 2.0.2.1 and second-type regions 2.0.2.2. The combination in the first layer is different from the combination in the second layer in terms of the positioning and the proportions of the two types of layers. In particular, the combination of the first layer differs from the combination of the second layer in terms of the in-plane positioning and size of the first-type regions 2.0.2.1 and second-type regions 2.0.2.2. In this way, the optical properties of the first and second layer are substantially different and can be used to fine-tune locally the optical properties of the patterned optical material layer 2.0.2.

Figure 5 shows an embodiment of an optical network 1 with a multi-layer multiplier structure. In particular, the multi-layer multiplier structure of the optical network 1 comprises a first layer and a second layer directly on the first layer. Each of the first layer and the second layer comprises a plurality of multiplier units 1.1. At least some of the multiplier units 1.1 in the first layer overlap with some of the multiplier units 1.1 in the second layer. In this way, the plurality of multiplier units 1.1 of the optical network 1 are particularly densely packed.

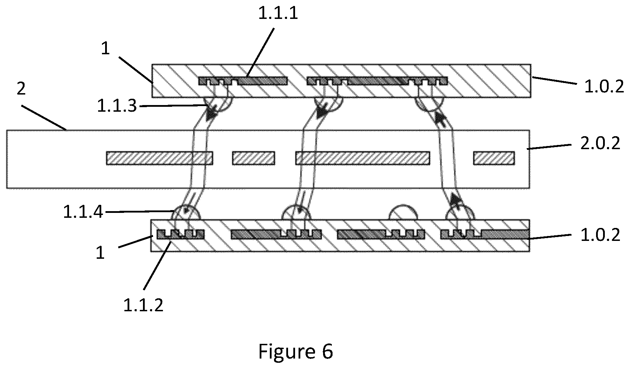

Figure 6 shows an embodiment of the optical computing device 10, wherein the optical network 1 and the optical medium 2 are configured in a transmission configuration. In this transmission configuration each propagation path of a first optical signal transmits through the optical medium 2 (unless it is completely absorbed by the optical medium).

In Figure 6, the optical network 1 again comprises a multi-layer multiplier structure. However, contrary to Figure 5, the multi-layer multiplier structure of the optical network 1 in Figure 6 comprises a first layer and a second layer spaced apart from the first layer. The first layer is overlapping with the second layer. The optical medium 2 is positioned between the first and the second layer of the multi-layer multiplier structure of the optical network 1.

The first layer of the multi-layer multiplier structure of the optical network 1 comprises the first couplers 1.1.1 of the multiplier units 1.1. The first couplers 1.1.1 of the multiplier units 1.1. are part of a first Mach-Zehnder interferometer network in the first layer. The first layer may be part of a first semiconductor chip or die.

The second layer of the multi-layer multiplier structure of the optical network 1 comprises the second couplers 1.1.2 of the multiplier units 1.1. The second couplers 1.1.1 of the multiplier units 1.1 are part of a second Mach-Zehnder interferometer network in the second layer. The second layer may be part of a second semiconductor chip or die spaced apart from the first semiconductor chip or die.

In this case, each multiplier unit 1.1 has two disjunct portions, i.e., a first portion corresponding to a portion of the first layer and a second portion corresponding to a portion of the second layer.

Additionally, each multiplier unit 1.1 comprise a first lens 1.1.3 and a second lens 1.1.4. The first lens 1.1.3 is arranged between the first coupler 1.1.1 and the optical medium 2 for fine-tuning the propagation path of a first input signal from the first coupler 1.1.1 towards the optical medium 2. The second lens 1.1.4 is arranged between the second coupler 1.1.2 and the optical medium 2 for fine-tuning the propagation path of a multiplied first input signal from the optical medium 2 towards the second coupler 1.12.

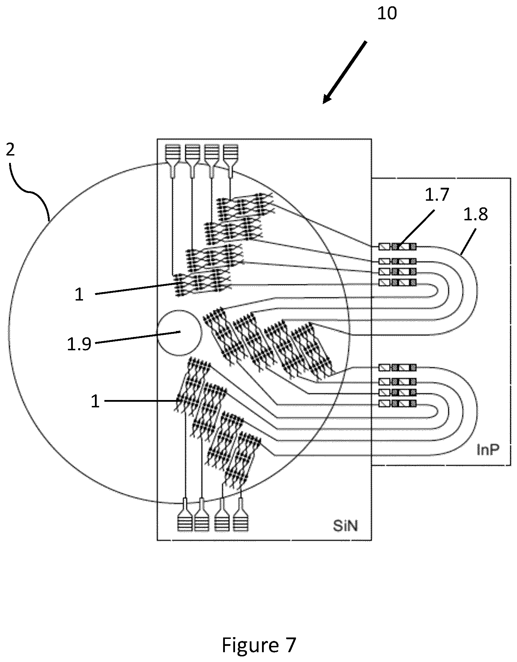

Figure 7 shows another embodiment of the optical computing device 10. With respect to the embodiments discussed in relation to Figures 1 to 6, the optical computing device 10 shown in Figure 7 comprises a plurality of optical networks 1. The plurality of optical networks 1 shown in Figure 1 may also be considered as one large optical network 1. The plurality of optical networks 1 emulate a neural network, wherein each optical network 1 of the plurality of optical networks emulates at least one layer of the neural network. The optical computing device 10 can thus be used for machine and/or deep learning applications.

The optical networks 1 are coupled via a plurality of delay lines 1.8. Each delay line 1.8 comprises a nonlinear optical element 1.7. Each nonlinear optical element is configured as a nonlinear optical activation function. Each nonlinear optical activation function comprises four semiconductor optical amplifier, SOA.

In Figure 7, the waveguide arrays of the optical networks 1 form a silicon nitride layer, SiN. The area of the SiN waveguide arrays is approximately 120 Millimetres in length and 80 Millimetres in width. The nonlinear optical elements 1.7 are made from indium phosphide, InP. The InP layer is approximately 20 Millimetres in length and 10 Millimetres in width. The delay lines 1.8 connect the silicon nitride layer with the indium phosphide layer.

In this embodiment, the optical medium 2 is a disc and comprises a central cut-out region 1.9. The cut-out region 1.9 is circular and has been cut out by using Laser cutting. In an alternative embodiment, the cut-out region 1.9 may also be rectangular or square shape.

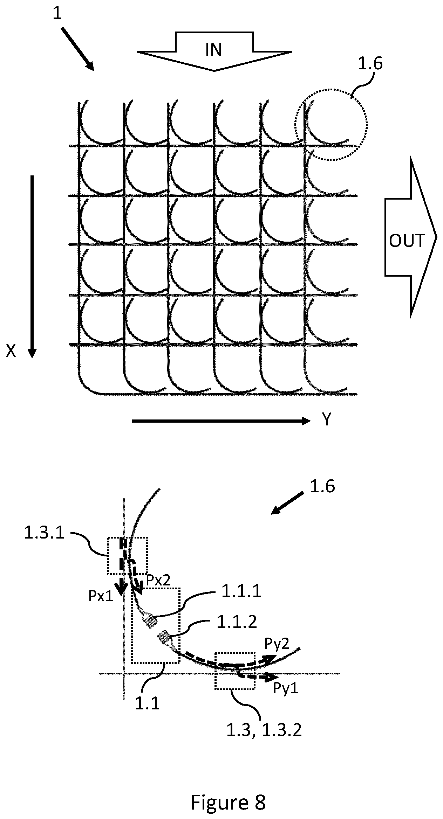

Figure 8 shows another embodiment of an optical network 1 that comprises or consists of a crossbar array. Signals are provided as an input vector to the optical network 1 in the x-direction (row direction/index). Output signals are received from the optical network 1 as an output vector in the y-direction (column direction/index). The optical network 1 mediates a matrix-vector multiplication, wherein a matrix stored in the optical medium 2 (not shown in Figure 8) is multiplied by the optical network with an input vector to obtain the output vector.

Each unit cell 1.6 of the crossbar array comprises a multiplier unit 1.1, wherein each multiplier unit 1.1 is configured as described with respect to the embodiments discussed in relation to Figures 1 to 6. In particular, each multiplier unit 1.1 of a unit cell 1.6 comprises a first grating coupler 1.1.1 and a second grating coupler 1.1.2. Note, that the unit cells 1.6 depicted in the upper panel of Figure 8 seem to show no couplers. However, the couplers have not been depicted in the upper panel simply due to limited resolution. In fact, each unit cell 1.6 in the upper panel is configured as the unit cell 1.6 shown in more detail in the lower panel of Figure 8, i.e., with a first grating coupler 1.1.1 and a second grating coupler 1.1.2.

Moreover, each unit cell 1.6 of the crossbar array comprises two waveguide coupling elements, a first waveguide coupling element 1.3.1 and a second waveguide coupling element 1.3.2. The first waveguide coupling element 1.3.1 of each unit cell 1.6 couples at least a portion Px2 of an input signal propagating along the x-direction as a first input signal into the multiplier unit 1.1 of the unit cell 1.6. The other portion Px1 of the input signal is propagated further towards a neighboured unit cell 1.6 in x-direction.

The second waveguide coupling element 1.3.2 receives a first output signal corresponding to the multiplied first input signal from the first multiplier unit 1.1 and couples at least a portion Py1 of the first output signal into a waveguide in y-direction. In this way the portion of the first output signal coupled into the waveguide in y-direction can propagate to a neighboured unit cell 1.6 in y-direction, where it gets combined with a coupled-in portion of another first output signal coming from the respective multiplier unit 1.1 of the neighboured unit cell 1.6. In this way, at least some of the second waveguide coupling elements 1.3.2 are adder units 1.3 as described with respect to the embodiments discussed in relation to Figures 1 to 6. The second waveguide coupling elements 1.3.2 add (at least portions of) first output signals coming from two different multiplier units 1.1 along the y-direction.

Thus, two neighboured unit cells 1.6 form a multiply and accumulate unit, MAC unit 1.5 as discussed further above.

The coupling ratios of the first waveguide coupling elements 1.3.1 vary along the x-direction of the crossbar array, wherein a coupling ratio Px1/Px2 of a first waveguide coupling element 1.3.1 is defined as the power Px1 of the portion of a signal transmitted by the first waveguide coupling element 1.3.1 to the next neighboured unit cell 1.6 in x-direction divided by the power Px2 of the portion of the first input signal coupled by the first waveguide coupling element 1.3.1 into the first multiplier unit 1.1. Specifically, the coupling ratios of the first waveguide coupling element 1.3.1 increase from unit cell 1.6 to unit cell 1.6 in x-direction to compensate for signal loss in a waveguide along the x-direction and ensure that the first input signals for the multiplier units 1.6 have the same power along the x-direction. The coupling ratios Px1/Px2 of the first waveguide coupling elements 1.3.1 are thus configured to compensate for a signal loss from unit cell 1.6 to unit cell 1.6 in x-direction as signal portions get distributed across the crossbar array.

The coupling ratios of the second waveguide coupling elements 1.3.2 also vary along the y-direction of the crossbar array, wherein a coupling ratio Py1/Py2 of a second waveguide coupling element 1.3.2 is defined as the power Py1 of the portion of a first output signal of the multiplier unit 1.1 that is coupled by the second waveguide coupling element 1.3.2 into a waveguide of the crossbar array in y-direction divided by the power Py2 of the portion of the output signal not coupled by the second waveguide coupling element 1.3.2 into said waveguide in y-direction. Specifically, the coupling ratios Py1/Py2 of the second waveguide coupling elements 1.3.2 decrease from unit cell 1.6 to unit cell 1.6 in y-direction to compensate for signal gain in a waveguide along the y-direction and ensure balanced weighting of the contributions to the output signal of each cell in the y-direction. The coupling ratios of the second waveguide coupling elements 1.3.2 are thus configured to compensate for a signal gain from unit cell 1.6 to unit cell 1.6 in y-direction as signal portions get distributed across the crossbar array.

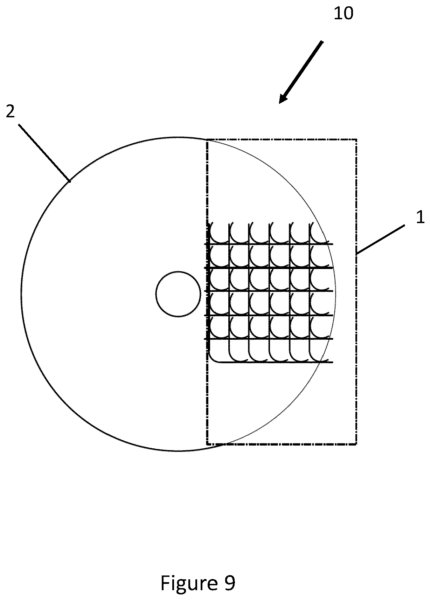

Figure 9 shows a crossbar array as an optical network 1 together with an optical medium 2. In particular, in the crossbar array shown in Figure 9 each multiplier unit 1.1 of a unit cell 1.6 is optically coupled to a (different) memory cell 2.1 of the optical medium 2. Thus, different first input signals received by the multiplier units 1.1 can be multiplied with different first weight factors stored in the memory cells 2.1. Since first output signals coming from multiplier units 1.1 in different neighboured unit cells 1.6 along a row of the crossbar array are added by the second waveguide coupling elements 1.3.2, the crossbar array realizes an optical matrix-vector multiplication as described further above.

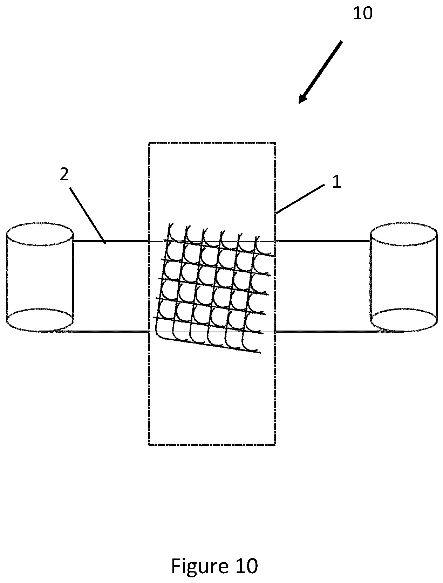

Figure 10 shows another embodiment of the optical medium 2, wherein the optical medium comprises a linear tape. In this case, the optical medium 2 is translatorily mounted for performing a translation of the optical medium 2 relative to the optical network 1. In this case, the drive unit is configured to translate the optical medium 2 in a direction parallel to an in-plane vector (e.g., in the x-y plane) of the crossbar array as the optical network 1 for changing the memory cells 2.1 that are optically coupled with the multiplier units 1.1. The optical computing device 10 thus comprises a conveyer belt configuration.

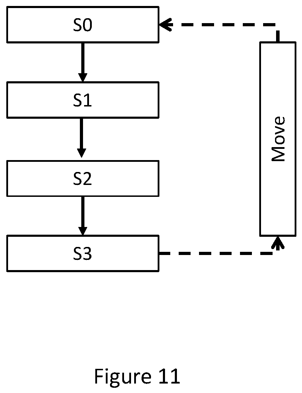

Figure 11 shows a schematic process flow of an optical computing method carried out with an optical computing device 10. The optical computing method comprises:
In an initialization step S0, the method comprises optically coupling each multiplier unit 1.1 of the plurality of multiplier units 1.1 with a different first memory cell 2.1 of the plurality of memory cells 2.1. The first memory cells 2.1 are a first subset of the plurality of memory cells 2.1 of the optical medium 2. The optical coupling is achieved by bringing the optical medium 2 in an initial position relative to the optical network 1. The initial position is configured to bring the first subset of first memory cells 2.1 in optical communication with the multiplier units 1.1.

In a first step S1, the method comprises receiving, by at least one multiplier unit 1.1, a first input signal corresponding to a component of a first vector. More specifically in this embodiment, each multiplier unit 1.1 of the plurality of multiplier units 1.1 receives a different first input signal corresponding to a different component of the first vector.

In a second step S2, the method comprises propagating, by the at least one multiplier unit 1.1, the first input signal further towards a first memory cell 2.1 for multiplying the first input signal with a first weight factor stored in the first memory cell 2.1, wherein the first weight factor corresponds to a first matrix element. More specifically in this embodiment, each multiplier unit 1.1 propagates a different first input signal towards a different first memory cell 2.1 for multiplication with a respective first weight factor. Each first input signal is multiplied with a first weight factor by letting each first input signal interact with a different first memory cell 2.1 as described further above.

In a third step S3, the method comprises receiving, by the at least one multiplier unit 1.1, the first input signal multiplied with the first weight factor back from the first memory cell 2.1 to generate a first output signal representing a first multiplication result for further processing. More specifically in this embodiment, each multiplier unit 1.1 receives a first input signal multiplied with a first weight factor back from a different first memory cell 2.1 to generate a first output signal.

The optical computing method also comprises moving, by a drive unit of the optical computing device 10, the optical medium 2 relative to the optical network 1 for changing the memory cells 2.1 of the optical medium 2 that are optically coupled to the multiplier units 1.1 of the optical network 1. The moving of the optical medium 2 may change the position of the optical medium with respect to the optical network from an initial position to a new position. By changing to the new position, the first subset of first memory cells 2.1 become optically decoupled from the multiplier units 1.1 and a second subset of second memory cells 2.1 of the plurality of memory cells 2.1 of the optical medium 2 become optically coupled with the multiplier units 1.1.

Subsequently, another iteration of steps S0 to S3 is carried out by receiving a new set of first input signals and generating a new set of first output signals as described further above when discussing steps S0 to S3. The steps S0 to S3 and the moving of the optical medium can thus be repeated iteratively.

It is noted that the moving of the optical medium does not necessarily need to correspond to a discrete step that is only being carried out after performing step S3. Instead, the optical medium 2can also be moved, e.g., rotated, with a constant speed while steps S0 to S3 or performed or any possible subset of these steps. Alternatively, steps S0 to S3 can also be carried out consecutively a number of times with the same first memory cells 2.1 but different first input signals before the optical medium 2 is moved to a new position and the computing continues with a new set of memory cells 2.1.

In the following we provide some exemplary number estimates of the proposed optical computing device and the optical computing method.

In an exemplary embodiment of an optical computing device 10, a disc as an optical medium 2 comprises about 55.000 tracks 2.3 with a total writeable/readable area of memory cells 2.1 of about 5*10⁹ Square Micrometer.

The optical network 1 comprises about 27.500 MAC units 1.5. Note, that each track 2.3 is optically coupled to another multiplier unit 1.1 and each MAC unit 1.5 comprises two multiplier units 1.1. Each MAC unit 1.5 is configured to carry out 3 operations, OPS. At a realistic 12 GHz average repetition rate this corresponds to approximately 1 PetaOPS.

Here, it is assumed that a 100 GHz repetition rate corresponds to 1 pulse every 10 picoseconds, wherein one pulse corresponds to the first input signals simultaneously received by the plurality of multiplier units 1.1 in one iteration of step S0. In a realistic computing simulation about 12% of the time is spent on sending repeatedly first input signals in bursts to the multiplier units 1.1 to repeatedly carry out steps S0 to S3 before moving the optical medium 2 to a new position, wherein about 88% of the time is spent on the moving of the optical medium 2 itself to the new position for changing the memory cells 2.1 and thus the matrix. This results in a 12 GHz average repetition rate.

Here, it is further assumed that the angular velocity of a disc as the optical medium 2 moved by the drive unit is about 30 Nanometer per Nanosecond. A memory cell is about 1 Micrometre in lateral size along a track 2.3 requiring a time of about 33 Nanoseconds to move to a new set of memory cells 2.1. Moreover, a burst may have a total duration of about 5 Nanoseconds and can comprise about 450 pulses corresponding to 450 iterations of steps S0 to S3 or, equivalently, a batch size of 450.

In the following, we roughly estimate the power consumption per operation. Spinning the disc would consume about 5 Watt. Performing a matrix-vector multiplication with a 16 by 16 Matrix requires about 200 activation functions. Each activation function realized as a SOA-Quartet, i.e., with 4 SOAs, consumes about 20-100 milliwatt corresponding to a total of 4 Watt to 20 Watt power consumption for 200 activation functions. Therefore, the total power required is about 9 Watt to 25 Watt. Consequently, we arrive at 40 to 110 TerraOPS per Watt (TOPS/W). This is far beyond state-of-the-art processors that typically operate at about 5-6 TOPS/W.

Features of the different embodiments which are merely disclosed in the exemplary embodiments as a matter of course can be combined with one another and can also be claimed individually.

## Claims

1. An optical computing device (10) comprising
an optical network (1) having a plurality of multiplier units (1.1); and an optical medium (2) having a plurality of memory cells (2.1), wherein each multiplier unit (1.1) of the plurality of multiplier units (1.1) is in optical communication with a memory cell (2.1) of the plurality of memory cells (2.1), and wherein
each multiplier unit (1.1) is configured to receive a first input signal and propagate the first input signal further towards a first memory cell (2.1) of the plurality of memory cells (2.1) of the optical medium (2) for multiplying the first input signal with a first weight factor stored in the first memory cell (2.1); and
each multiplier unit (1.1) is further configured to receive the first input signal multiplied with the first weight factor back from the first memory cell (2.1) to generate from the multiplied first input signal a first output signal for further processing.

2. The optical computing device (10) according to the previous claim, wherein the plurality of multiplier units (1.1) are arranged in one or more parallel layers (1.0.2) of the optical network (1) and/or the plurality of multiplier units (1.1) are overlapping a same substrate (1.0.1) of the optical network (1).

3. The optical computing device (10) according to any previous claim, wherein each multiplier unit (1.1) of the plurality of multiplier units (1.1) comprises a first coupler (1.1.1) for coupling a first input signal out of a layer (1.0.2) of the optical network (1) and propagate the first input signal further towards the optical medium (2) and/or each multiplier unit (1.1) of the plurality of multiplier units (1.1) comprises a second coupler (1.1.2) for coupling a multiplied first input signal coming from the optical medium (2) back into a layer (1.0.2) of the optical network (1).

4. The optical computing device (10) according to any previous claim, wherein the optical network (1) comprises a waveguide array, wherein each of the plurality of multiplier units (1.1) is connected to a waveguide of the waveguide array.

5. The optical computing device (10) according to any previous claim, wherein the optical network (1) comprises or consists of a Mach-Zehnder interferometer network or a Crossbar array.

6. The optical computing device (10) according to any previous claim, wherein the optical medium (2) is spaced apart from the optical network (1) in a direction normal to one or more layers (2.0.1, 2.0.2) of the optical medium (2) and/or to one or more layers (1.0.1, 1.0.2) of the optical network (1).

7. The optical computing device (10) according to any previous claim, wherein the optical medium (2) comprises a patterned optical material layer (2.0.2) having at least one first-type region (2.0.2.1) and at least one second-type region (2.0.2.2), wherein the patterning of the optical material layer (2.0.2) into the at least one first-type region (2.0.2.1) and the at least one second-type region (2.0.2.2) determines the values of the first weight factors stored in the first memory cells (2.1).

8. The optical computing device (10) according to claim 7, wherein the patterned optical material layer (2.0.2) comprises, preferably consists of, a phase change material and the at least one first-type region (2.0.2.1) comprises, preferably consists of, the phase change material in a first phase and the at least one second type region (2.0.2.2) comprises, preferably consists of, the phase change material in a second phase different from the first phase.

9. The optical computing device (10) according to any previous claim further comprising a drive unit configured to receive the optical medium (2) and move the optical medium (2) relative to the optical network (1) for changing at least one memory cell (2.1) of the optical medium (2) optically coupled and/or in optical communication with at least one of the multiplier units (1.1) of the plurality of multiplier units (1.1).

10. The optical computing device (10) according to any previous claim, wherein the plurality of memory cells (2.1) are arranged in a plurality of tracks (2.3) spaced apart from each other, wherein each track (2.3) comprises at least one memory cell (2.1) and each track (2.3) is in optical communication with another multiplier unit (1.1) of the plurality of multiplier units (1.1).

11. The optical computing device (10) according to any previous claim and further configured to perform an optical matrix-vector multiplication, wherein each first input signal corresponds to a component of a vector and each first weight factor corresponds to a matrix element of a matrix to be multiplied with the vector.

12. An optical computing method for performing matrix-vector multiplication by using an optical computing device (10) comprising an optical network (1) having a plurality of multiplier units (1.1) and an optical medium (2) having a plurality of memory cells (2.1), the optical computing method comprising
optically coupling each multiplier unit (1.1) of the plurality of multiplier units (1.1) with a different first memory cell (2.1) of the plurality of memory cells (2.1); and
receiving, by at least one multiplier unit (1.1), a first input signal corresponding to a component of a first vector; and
propagating, by the at least one multiplier unit (1.1), the first input signal further towards a first memory cell (2.1) for multiplying the first input signal with a first weight factor stored in the first memory cell (2.1), wherein the first weight factor corresponds to a first matrix element; and
multiplying the first input signal with the first weight factor by letting the first input signal interact with the first memory cell (2.1); and
receiving, by the at least one multiplier unit (1.1), the first input signal multiplied with the first weight factor back from the first memory cell (2.1) to generate a first output signal representing a first multiplication result for further processing.

13. The optical computing method according to claim 12 further comprising
moving, by a drive unit of the optical computing device (10), the optical medium (2) relative to the optical network (1) and thereby optically coupling the at least one multiplier unit (1.1) with a second memory cell (2.1) of the plurality of memory cells (2.1) different from the first memory cell (2.1) of the plurality of memory cells (2.1) for generating from a second input signal received by the at least one multiplier unit (1.1) and from a second weight factor stored in the second memory cell (2.1) a second output signal representing a second multiplication result.

14. The optical computing method according to claim 12 or 13, further comprising moving, by a drive unit of the optical network (10), the optical medium (2) relative to the optical network (1), wherein the moving the optical medium (2) comprises
rotating the optical medium (2) around a normal vector of an optical network layer (1.0.1, 1.0.2) or translating the optical medium (2) in a direction parallel to an in-plane vector of an optical network layer (1.0.1, 1.0.2).

15. The optical computing method of claim 12, 13 or 14 further comprising
adding, by an adder unit (1.3) of the optical network (1), the first output signal to another signal propagating in the optical network (1) to perform an optical multiply-accumulate operation as part of the matrix-vector multiplication.
